# EUROPÄISCHE PATENTSCHRIFT

(11) **EP 4 476 015 B1**
(45) Veröffentlichungstag und Bekanntmachung des Hinweises auf die Patenterteilung: **09.12.2026**
(21) Anmeldenummer: 23704239.5
(22) Anmeldetag: 30.01.2023
(51) Int. Cl.: B23B 31/20

(54) **FÜHRUNGSBUCHSE MIT SPANNZANGE**
GUIDE BUSHING WITH COLLET
DOUILLE DE GUIDAGE AVEC PINCE DE SERRAGE

(30) Priorität: 10.02.2022 DE 102022103148
(43) Veröffentlichungstag der Anmeldung: 18.12.2024
(73) Patentinhaber: JBS System GmbH, 24119 Kronshagen (DE)
(72) Erfinder: JESS, Maik, 24119 Kronshagen (DE); AMRHEIN, Simon, 63762 Großostheim (DE)
(74) Vertreter: Lobemeier, Martin Landolf
(86) Internationale Anmeldenummer: PCT/DE2023/100066
(87) Internationale Veröffentlichungsnummer: WO 2023/151745

(56) Entgegenhaltungen:
- EP-A1- 3 360 642
- WO-A1-2007/104438
- DE-A1- 102012 017 777
- DE-U1- 202016 102 133

## Beschreibung

Die Erfindung betrifft eine Führungsbuchse aufweisend eine Spannzange mit einer Mehrzahl von radial gegeneinander beweglichen Backen, die mit ihren Spannflächen eine gemeinsame Aufnahme zum Führen einer in einer Drehmaschine zu bearbeitenden Stange ausbilden.

Führungsbuchsen und Spannzangen dienen dazu, die durch Langdreh-Maschinen zu bearbeitende Materialstange während des Bearbeitungsvorgangs zu halten, zu führen und gegen Bearbeitungskräfte abzustützen. Auf diese Weise können sehr lange und schlanke Werkstücke mit geringen Bearbeitungstoleranzen hergestellt werden. Schwankungen des Durchmessers der Materialstange können mit derartigen Führungsbuchsen ausgeglichen und Stangen mit verschiedenen Durchmessern mit derselben Führungsbuchse bearbeitet werden. Bei Langdrehmaschinen erfolgt die Bearbeitung des Werkstücks, indem die Materialstange mit einer Vorschubbewegung des Spindelstocks in Z-Richtung durch die Führungsbuchse geschoben wird und die Zustellbewegung des Bearbeitungswerkzeugs in der Grundfunktion ausschließlich in X-Richtung erfolgt. Die Spannzange wird dabei pneumatisch geöffnet und geschlossen, wobei Öffnen, Schließen und Vorschub in der Regel im Teilefertigungsprogramm der Maschine hinterlegt sind.

Während der Materialbearbeitung ist die Spannzange jedenfalls geschlossen und übt insbesondere während der Vorschubbewegung eine für den jeweiligen Bearbeitungsschritt erforderliche Spannkraft auf die Materialstange aus.

Die Vorschubbewegung der Materialstange im geschlossenen Zustand der Spannzange erzeugt eine Reibungskraft an den im Folgenden allgemein als Spannflächen bezeichneten inneren Führungsflächen der Spannzange, die einerseits Folge der erforderlichen Spannkraft zum Führen und Halten der Materialstange während der Bearbeitung ist, andererseits durch den Schneiddruck der Bearbeitungswerkzeuge nochmals erhöht wird. Diese Reibungskraft führt zu Reibverschleiß der Spannflächen und damit zu einer nachlassenden Präzision des Haltens und Führens, die zu Qualitätsverlusten der Bearbeitungspräzision führt.

Dieser Vorgang ist schleichend, eine Abnahme der Maßhaltigkeit der Werkstücke bis hin zur Überschreitung der Toleranz ist die Folge. In der Regel wird dies durch stichprobenartige Kontrollen während der Fertigung aufgedeckt und die Spannzange ausgewechselt.

Dieses Vorgehen birgt j edoch den Nachteil, dass Qualitätsverluste zu spät erkannt werden, Werkstücke nahe der Toleranzgrenze gefertigt werden oder gar Ausschuss produziert wird, wodurch ungeplante Stillstandzeiten die Folge sind.

Wenngleich Führungsbuchsen beispielsweise aus der WO 2007/104438 A1 und elektronische Einrichtungen zur Verschleißerkennung bei Gleitlagern aus der DE 20 2016 102 133 U1 bekannt sind, ist es Aufgabe der Erfindung, eine einfache Lösung für ein rechtzeitiges Erkennen von Verschleiß einer Spannzange im laufenden Betrieb zu finden.

Diese Aufgabe wird erfindungsgemäß durch die Führungsbuchse mit den Merkmalen von Anspruch 1 gelöst. Die Unteransprüche geben vorteilhafte Ausgestaltungen der Erfindung wieder.

Der Grundgedanke der Erfindung besteht darin, eine an sich bekannte Spannzange mit einem Verschleißindikator auszustatten. Insbesondere nutzt die erfindungsgemäße Lösung den Umstand, dass durch Verschleiß insbesondere das Material an der Innenseite der Spannzangensegmente abgetragen wird, also in der Aufnahme für die Materialstange. Vorgeschlagen werden speziell eine oder mehrere, insbesondere radial verlaufende Bohrungen am vorderen Ende der Spannzangenbacken, die jeweils als Sacklochbohrung von außen nach innen bis nahe an die innere Wandung der Backen ausgeführt sind. Das verbleibende Maß zwischen dem tiefsten Punkt des Sackloches und der inneren Kontur der Backen ist speziell so bemessen, dass es dem maximal zulässigen Abtrag durch Verschleiß entspricht. Wird Material an der Innenseite der Backen durch Verschleiß abgetragen, entsteht am Ende des Sacklochs ein Durchbruch, wodurch aus dem Sackloch ein Durchgangsloch wird. Der Durchbruch nach innen zeigt die Verschleißgrenze an, so dass die betreffende Spannzange aus dem Produktionsprozess genommen werden kann, bevor fehlerhafte Teile produziert werden.

Die beschriebenen Sacklochbohrungen werden fernüberwacht, wobei vorgeschlagen wird, die Sacklochbohrungen in den Backen mit Kanälen in der Spannzangenaufnahme verdrehsicher in Deckung zu bringen und Druckluft über die Kanäle in die Sacklochbohrungen zu leiten, sodass ein verschleißbedingter Durchbruch zu einem Druckabfall führt und ein Signal auslöst. Erfindungsgemäß wird also eine Führungsbuchse zum Führen einer in einer Drehmaschine zu bearbeitenden Stange, mit-einer in einer Spannzangenaufnahme axial verschieblich gelagerten Spannzange, die eine Mehrzahl von radial gegeneinander bewegliche Backen aufweist, die mit ihren Spannflächen eine gemeinsame Aufnahme zum Führen einer in einer Drehmaschine zu bearbeitenden Stange ausbilden, vorgeschlagen, wobei ein in wenigstens einer Backe von der der Spannfläche der Backe gegenüberliegenden Außenfläche in Richtung der Spannfläche geführtes Sackloch mit einem einerseits durch die Spannfläche und andererseits durch das Sackloch begrenzten Sacklochboden, der durch Verschleiß der Spannfläche die Ausbildung eines den Verschleiß der Spannzange anzeigenden Durchgangslochs bewirkend eingerichtet ist, und einer mit dem Sacklochboden der Spannzange kommunizierenden Einrichtung, die zur Beaufschlagung des Sacklochs mit Druckluft, zum Erfassen des Luftdrucks im Sackloch und bei Ausbildung eines durch Verschleiß des Sacklochbodens erzeugten Durchgangslochs erfassten Luftdruckabfalls zur Ausgabe eines den Verschleiß der Spannzange signalisierenden Alarms eingerichtet ist. Die Dicke des Sacklochbodens entspricht also dem vorbestimmten maximal zulässigen Verschleiß der Spannflächen der Backen, der dadurch erfasst werden kann, dass aus dem Sackloch mittels Abrasion ein Durchgangsloch entsteht.

Das Sackloch ist bevorzugt radial angeordnet, sodass ohne weiteres ein Sacklochboden mit einer genau definierten Dicke gefertigt werden kann.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: einen Längsschnitt durch eine besonders bevorzugt ausgestaltete Spannzange einer Führungsbuchse nach der Erfindung; und
- Fig. 2: einen weiteren Längsschnitt durch die besonders bevorzugt ausgestaltete Spannzange in einer Detailansicht.

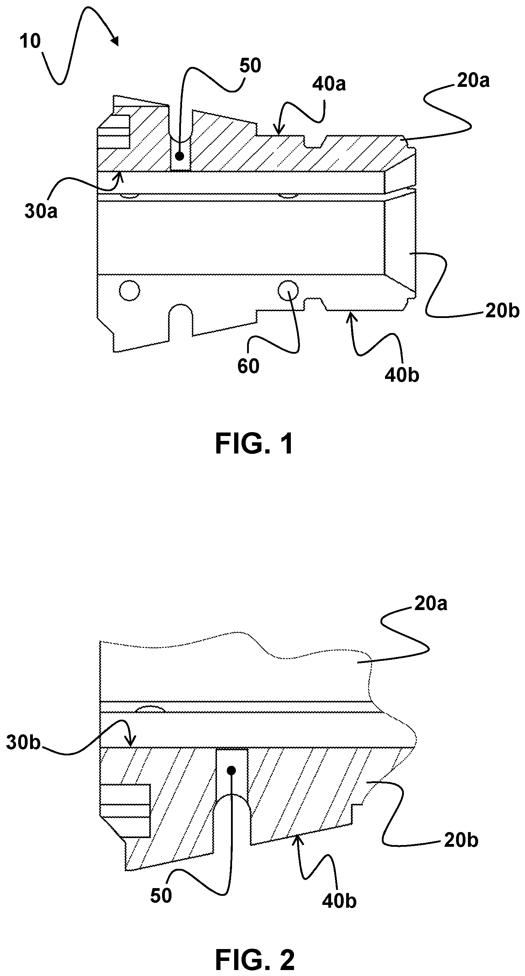

Fig. 1 zeigt ein besonders bevorzugt ausgestaltetes Ausführungsbeispiel einer Spannzange einer Führungsbuchse nach der Erfindung in einem Längsschnitt. Die Spannzange 10 weist im gezeigten Beispiel drei radial gegeneinander bewegliche Backen 20a, 20b auf, von denen in der Schnittdarstellung zwei Backen 20a, 20b zu erkennen sind. Die drei Backen 20a, 20b bilden - wie bekannt - mit ihren Spannflächen 30a, 30b eine gemeinsame Aufnahme zum Führen einer in einer Drehmaschine zu bearbeitenden Stange aus. Darüber hinaus sind in der einen Backe 20b die zur Befestigung von zwischen den Backen 20a, 20b angeordneten Federelementen vorgesehenen Aufnahmen 60 zu erkennen.

Erfindungsgemäß ist nun in wenigstens einer Backe 20a, 20b ein von der der Spannfläche 30a, 30b der Backe 20a, 20b gegenüberliegenden Außenfläche 40a, 40b in Richtung der Spannfläche 30a, 30b radial verlaufendes Sackloch 50 vorgesehen, wobei der Sacklochboden einerseits durch die Spannfläche 30a, 30b und andererseits durch das Sackloch 50 begrenzt ist. Die Dicke des Sacklochbodens entspricht dem vorbestimmten maximal zulässigen verschleißbedingten Materialabtrag, durch den die Ausbildung eines den Verschleiß der Spannzange 10 anzeigenden Durchgangslochs bewirkt wird.

Fig. 2 zeigt einen weiteren Längsschnitt durch die besonders bevorzugt ausgestaltete Spannzange in einer Detailansicht, aus der zu erkennen ist, dass der Sacklochboden eine geringe Dicke aufweist, die dem für die Verwendung der Spannzange 10 maximal zulässigem Verschleiß entspricht. Wird der Sacklochboden durch Verschleiß der Spannflächen 30a, 30b vollständig abgetragen, kann dieser Verschleiß durch Detektion eines Durchgangs- statt eines Sacklochs erkannt und die Spannzange 10 ausgetauscht werden.

## Patentansprüche

1. Führungsbuchse zum Führen einer in einer Drehmaschine zu bearbeitenden Stange, mit
- einer in einer Spannzangenaufnahme axial verschieblich gelagerten Spannzange (10), die eine Mehrzahl von radial gegeneinander bewegliche Backen (20a, 20b) aufweist, die mit ihren Spannflächen (30a, 30b) eine gemeinsame Aufnahme zum Führen einer in einer Drehmaschine zu bearbeitenden Stange ausbilden, wobei ein in wenigstens einer Backe (20a, 20b) von der der Spannfläche (30a, 30b) der Backe (20a, 20b) gegenüberliegenden Außenfläche (40a, 40b) in Richtung der Spannfläche (30a, 30b) geführtes Sackloch (50) mit einem einerseits durch die Spannfläche (30a, 30b) und andererseits durch das Sackloch (50) begrenzten Sacklochboden, der durch Verschleiß der Spannfläche (30a, 30b) die Ausbildung eines den Verschleiß der Spannzange (10) anzeigenden Durchgangslochs bewirkend eingerichtet ist,
und
- einer mit dem Sacklochboden der Spannzange (10) kommunizierenden Einrichtung, die zur Beaufschlagung des Sacklochs (50) mit Druckluft, zum Erfassen des Luftdrucks im Sackloch (50) und bei Ausbildung eines durch Verschleiß des Sacklochbodens erzeugten Durchgangslochs erfassten Luftdruckabfalls zur Ausgabe eines den Verschleiß der Spannzange (10) signalisierenden Alarms eingerichtet ist.

2. Führungsbuchse nach Anspruch 1, **dadurch gekennzeichnet, dass** das Sackloch (50) radial angeordnet ist.

## Claims

1. Guide bushing for guiding a bar to be machined in a lathe, comprising
- a collet (10) mounted so as to be axially slidable in a collet chuck, which collet (10) has a plurality of jaws (20a, 20b) that can move radially relative to one another and which, with their clamping surfaces (30a, 30b), form a common receptacle for guiding a bar to be machined in a lathe, wherein a blind hole (50), which is formed in at least one jaw from the outer surface (40a, 40b) opposite the jaw's clamping surface (30a, 30b) towards the clamping surface (30a, 30b), has a blind hole base bounded on one side by the clamping surface (30a, 30b) and on the other side by the blind hole (50) itself, this blind hole base being designed such that wear on the clamping surface (30a, 30b) causes the formation of a through-hole indicating the wear of the collet (10),
and
- a device communicating with the blind hole base of the collet (10), which is designed to supply compressed air to the blind hole (50), to measure the air pressure in the blind hole (50) and, in the event of a drop in air pressure caused by the formation of a through-hole resulting from wear of the blind hole base, to trigger an alarm signalling wear of the collet (10)

2. Guide bushing according to claim 1, **characterised in that** the blind hole (50) is arranged radially.

## Revendications

1. Douille de guidage pour le guidage d'une barre à usiner dans un tour, comportant
- une pince de serrage (10) montée de manière à pouvoir coulisser axialement dans un logement pour pince de serrage, laquelle pince de serrage présente une pluralité de mâchoires (20a, 20b) mobiles radialement les unes par rapport aux autres qui forment, avec leurs surfaces de serrage (30a, 30b), un logement commun pour le guidage d'une barre à usiner dans un tour, dans laquelle un trou borgne (50) guidé dans au moins une mâchoire (20a, 20b) depuis la surface extérieure (40a, 40b) opposée à la surface de serrage (30a, 30b) de la mâchoire (20a, 20b) en direction de la surface de serrage (30a, 30b), comportant un fond de trou borgne délimité, d'une part, par la surface de serrage (30a, 30b) et, d'autre part, par le trou borgne (50), est conçu pour provoquer, par l'usure de la surface de serrage (30a, 30b), la formation d'un trou traversant indiquant l'usure de la pince de serrage (10),
et
- un dispositif communiquant avec le fond de trou borgne de la pince de serrage (10) et configuré pour alimenter le trou borgne (50) en air comprimé, détecter la pression d'air dans le trou borgne (50) et délivrer en sortie une alarme signalant l'usure de la pince de serrage (10) en présence d'une chute de pression d'air détectée en cas de formation d'un trou traversant résultant de l'usure du fond de trou borgne.

2. Douille de guidage selon la revendication 1, **caractérisée en ce que** le trou borgne (50) est disposé radialement.
